Europäisches Patentamt

European Patent Office

Office européen des brevets

(19)

(11) Numéro de publication : **0 233 127 B1**

(12)

# FASCICULE DE BREVET EUROPEEN

(45) Date de publication du fascicule du brevet :
24.07.91 Bulletin 91/30

(51) Int. Cl.⁵ : **H02J 3/14, H05K 7/14**

(21) Numéro de dépôt : **87420009.0**

(22) Date de dépôt : **12.01.87**

(54) **Relais de délestage.**

(30) Priorité : **15.01.86 FR 8600595**
**15.01.86 FR 8600596**

(43) Date de publication de la demande :
**19.08.87 Bulletin 87/34**

(45) Mention de la délivrance du brevet :
**24.07.91 Bulletin 91/30**

(84) Etats contractants désignés :
**BE CH DE ES GB IT LI SE**

(56) Documents cités :
**EP-A- 0 047 089**
**FR-A- 2 294 573**
**FR-A- 2 424 651**
**FR-A- 2 436 521**
**FR-A- 2 535 908**

(73) Titulaire : **MERLIN GERIN**
**Rue Henri Tarze**
**F-38050 Grenoble Cédex (FR)**

(72) Inventeur : **Effosse, Michel**
**Merlin Gerin Sce. Brevets**
**F-38050 Grenoble Cedex (FR)**
Inventeur : **Gondry, Philippe**
**Merlin Gerin Sce. Brevets**
**F-38050 Grenoble Cedex (FR)**
Inventeur : **Prieto, Jean-Luc**
**Merlin Gerin Sce. Brevets**
**F-38050 Grenoble Cedex (FR)**

(74) Mandataire : **Kern, Paul et al**
**Merlin Gerin Sce. Brevets 20, rue Henri Tarze**
**F-38050 Grenoble Cédex (FR)**

## Description

L'invention est relative à un dispositif de délestage à boîtier moulé ayant sur l'une de ses faces latérales une borne d'entrée de connexion à la source de courant et sur la face opposée au moins deux bornes de sortie, l'une d'alimentation d'un circuit prioritaire et l'autre d'alimentation d'un circuit non prioritaire et contenant un premier conducteur de liaison directe de la borne d'entrée et de la borne de sortie prioritaire, un capteur de mesure du courant entrant par la borne d'entrée, une première carte à circuit imprimé portant les composants d'un circuit électronique de traitement du signal fourni par le capteur et un relais piloté par ledit circuit électronique et ayant des contacts insérés dans un circuit reliant la borne de sortie non prioritaire audit premier conducteur de liaison.

Un dispositif de délestage du genre mentionné permet la déconnexion de circuits non prioritaires, par exemple d'alimentation d'un chauffe-eau lorsque la puissance absorbée par l'installation dépasse la puissance de branchement. Ces dispositifs permettent de bénéficier d'un abonnement moins coûteux, l'inconvénient d'une déconnexion temporaire de certains circuits étant minime. Les dispositifs de délestage connus sont d'une fabrication coûteuse et leur installation n'est pas toujours rentable. Il est avantageux de disposer d'un dispositif de délestage du type à boîtier moulé modulaire susceptible d'être incorporé au tableau d'abonné avec les autres dispositifs de protection de l'installation.

La présente invention a pour but de permettre la réalisation d'un dispositif de délestage de fabrication simplifiée, permettant un abaissement notable du coût de fabrication.

Le dispositif de délestage selon l'invention est caractérisé en ce que ledit relais est rigidement assujetti à ladite première carte, son entrée étant connectée électriquement à un circuit imprimé de puissance de ladite première carte et sa sortie à un deuxième conducteur de liaison à la borne de sortie non prioritaire et que ledit premier conducteur de liaison est connecté mécaniquement à la première carte et est connecté électriquement par soudure audit circuit imprimé de puissance.

Dans un mode de réalisation préféré, la carte à circuit imprimé porte les circuits de commande et de puissance du dispositif de délestage, ainsi que les conducteurs d'entrée et de sortie raccordés à ces circuits. Sur la carte sont fixés les relais de déconnexion des circuits non prioritaires, l'entrée des relais étant connectée par soudure au circuit imprimé de puissance de la carte et la sortie portant le conducteur de liaison à la borne de sortie associée non prioritaire. La carte porte, de plus, un commutateur à circuit imprimé de réglage du seuil de délestage. Le boîtier moulé est avantageusement du type modulaire miniature, susceptible d'être encliqueté sur un rail profilé symétrique standard utilisé pour les tableaux d'abonnés. Le boîtier moulé est constitué de deux parties encliquetables, en l'occurrence un socle et un couvercle dont le plan de joint contient des conducteurs de liaison d'entrée et de sortie dont les extrémités sont agencées en plage de raccordement. L'ensemble des constituants est porté par la carte, et le montage est extrêmement simple, puisqu'il se résume à insérer la carte dans les rainures de guidage prévues dans le socle et à encliqueter le couvercle.

Le seuil minimal de ces délesteurs domestiques est de 15 ampères et généralement de 20 ampères, approprié aux puissances souscrites pour des habitations et ils sont inutilisables dans des installations industrielles soumises à des courants de plusieurs centaines ou milliers d'ampères.

Selon un développement de l'invention, un appareil standard est applicable aux deux types d'installations, domestiques et industrielles. A cet effet, le bloc de délestage est agencé pour un réglage de valeurs de délestage correspondant à une gamme de courants, comprenant des valeurs supérieures à 15 ampères, pour des installations de distribution domestique et au moins une valeur inférieure à 15 ampères pour un dispositif de délestage d'une installation de distribution industrielle. Dans ce dernier cas le signal de mesure est appliqué au bloc de délestage par un transformateur de courant standard, disponible dans le commerce, qui délivre généralement un signal de mesure de 5 ampères, le rapport de transformation étant bien entendu choisi en fonction du courant dans le circuit de puissance à surveiller. Le bloc de délestage est réglé pour un seuil de délestage de 5 ampères, correspondant à un courant multiplié par le rapport de transformation du transformateur dans le circuit de puissance. Le bloc de délestage fonctionne en relais de commande d'interrupteurs disposés dans les circuits non prioritaires de l'installation industrielle.

D'autres avantages et caractéristiques ressortiront plus clairement de la description qui va suivre d'un mode de mise en oeuvre de l'invention, donné à titre d'exemple non limitatif et représenté aux dessins annexés, dans lesquels :

- la figure 1 est une vue en élévation du dispositif de délestage selon l'invention, le couvercle étant supposé enlevé ;
- les figures 2 et 3 sont des coupes respectivement selon les lignes II-II et III-III de la figure 1 ;
- la figure 4 montre le schéma électrique d'un bloc de délestage selon la figure 1, utilisé dans une installation domestique ;
- la figure 5 montre le schéma électrique d'un bloc de délestage selon la figure 1, appliqué à une installation industrielle dont seule l'une des phases est représentée.

Sur les figures, un boîtier moulé 10 du type modulaire miniature est constitué d'un couvercle 12 et d'un socle 14 raccordés suivant un plan de joint 16. Le couvercle 12 et le socle 14 portent des moyens d'encliquetage 18 facilitant le montage du dispositif de délestage. Sur l'une des faces latérales du boîtier 10 est disposée une borne d'entrée 20, les bornes de sortie, en l'occurrence une borne de sortie d'un circuit prioritaire 22 et deux bornes de sortie 24, 26, de circuits non prioritaires sont disposées sur la face opposée. A l'intérieur du boîtier 10 est logée une carte à circuit imprimé 28 portant l'ensemble des constituants du dispositif de délestage. La carte 28 s'étend perpendiculairement au plan de joint 16 dans lequel est disposé un conducteur de liaison 30 de la borne d'entrée 20 et de la borne de sortie prioritaire 22, ce conducteur 30 traversant perpendiculairement la carte à circuit imprimé 28. Le conducteur 30 traverse un capteur de courant 32 en forme de tore intercalé entre la borne d'entrée 20 et la carte 28. Les bornes de sorties non prioritaires 24, 26, sont reliées par des conducteurs 34, 36, aux sorties de relais 38, 40, portés par la carte 28 sur la face opposée aux bornes 24, 26. Les entrées des relais 38, 40 sont raccordées électriquement par des soudures 42 à un circuit de puissance imprimé de la carte 28 également raccordé par une soudure 42 au conducteur 30. On voit que la borne d'entrée 20 alimente directement par le conducteur 30 le circuit prioritaire raccordé à la borne de sortie 22 et, par l'intermédiaire du circuit de puissance de la carte 28, des relais 38, 40 et des conducteurs 34, 36, les circuits non prioritaires raccordés aux bornes 24, 26. Le courant traversant le conducteur 30 est mesuré par le capteur 32, connecté par des fils 43 au circuit de commande imprimé de la carte 28. Les bobines (non représentées) des relais 38, 40, sont également raccordées à ce circuit de commande. Les conducteurs 30, 34, 36, s'étendent dans le plan de joint 16 et leurs extrémités libres constituent des plages de raccordement, par exemple insérées dans des bornes à cage 20, 22, 24, 26.

Le circuit électronique de commande porté par la carte 28 n'est pas décrit par la suite, ce circuit pouvant être du type faisant l'objet de la demande de brevet déposée conjointement et intitulée "RELAIS DE DELESTAGE, NOTAMMENT A EFFACEMENT JOURS DE POINTE" (EP-A-0 237 444) ou de tout autre type bien connu des spécialistes. Le circuit électronique de commande élabore un signal d'ouverture des relais 38, 40, lorsque le courant, mesuré par le capteur 32, dépasse un seuil prédéterminé avantageusement réglable par un commutateur 44. Le commutateur 44 comporte un bouton rotatif 46, accessible par une ouverture en forme de fente, ménagée dans le couvercle 12. Le bouton 46 porte un pont de contact 48 coopérant avec des plots portés par une carte à circuit imprimé 50, laquelle est fixée mécaniquement et raccordée électriquement à la carte à circuit imprimé 28. Les positions du bouton rotatif 46 définissent les différents seuils de délestage des relais 38, 40. La carte 28 porte des diodes électroluminescentes 52, signalant l'état des relais 38, 40. La carte 28 porte également un bloc 54 d'alimentation du circuit électronique et des relais 38, 40, et le boîtier 10 peut être agencé pour recevoir d'autres composants, par exemple un relais effacement jours de pointe recevant un signal extérieur par des bornes de commande non représentées sur les figures.

L'ensemble des composants et des circuits de puissance et de commande sont portés par la carte 28 qui peut être insérée dans des rainures de guidage 56, prévues sur les parois internes du socle 14. La mise en place, en l'occurrence l'encliquetage du couvercle 12 assure le maintien de la carte 28 et des bornes 20 à 26. Le montage du dispositif de délestage est donc particulièrement simple. En prévoyant selon l'invention un circuit imprimé de puissance sur la carte 28 portant le circuit imprimé de commande, toutes les connexions électriques sont reportées sur cette carte 28, ce qui facilite la réalisation de ces connexions.

Il est clair que le dispositif de délestage peut comporter un seul relais 38 assurant la déconnexion d'un seul circuit prioritaire ou au contraire 3 ou 4 relais, les dimensions de la carte 28 et du boîtier 10 étant bien entendu adaptées au nombre de relais. Le conducteur de neutre de l'installation peut être incorporé au boîtier 10 et dans ce cas il est bien entendu inutile de prévoir une borne d'alimentation de neutre.

L'invention est nullement limitée au mode de mise en oeuvre plus particulièrement décrit.

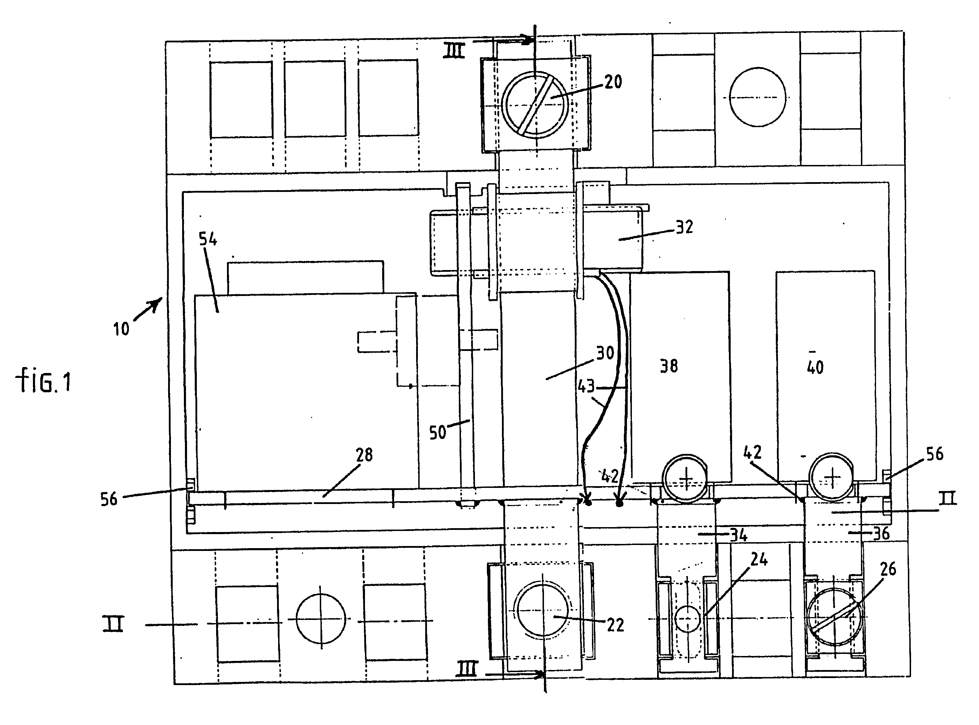

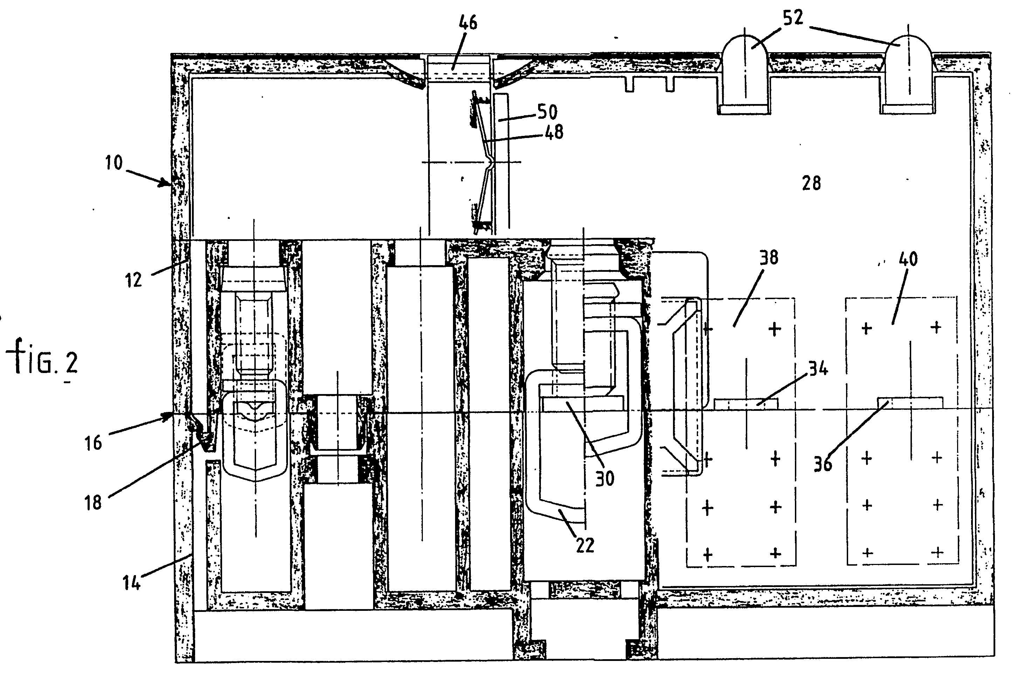

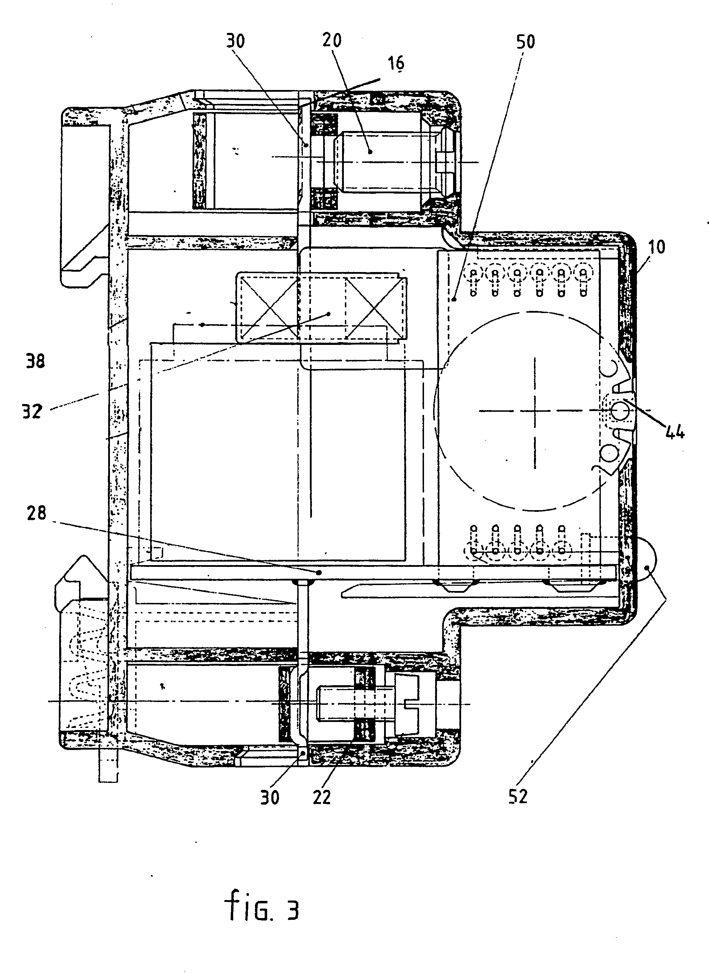

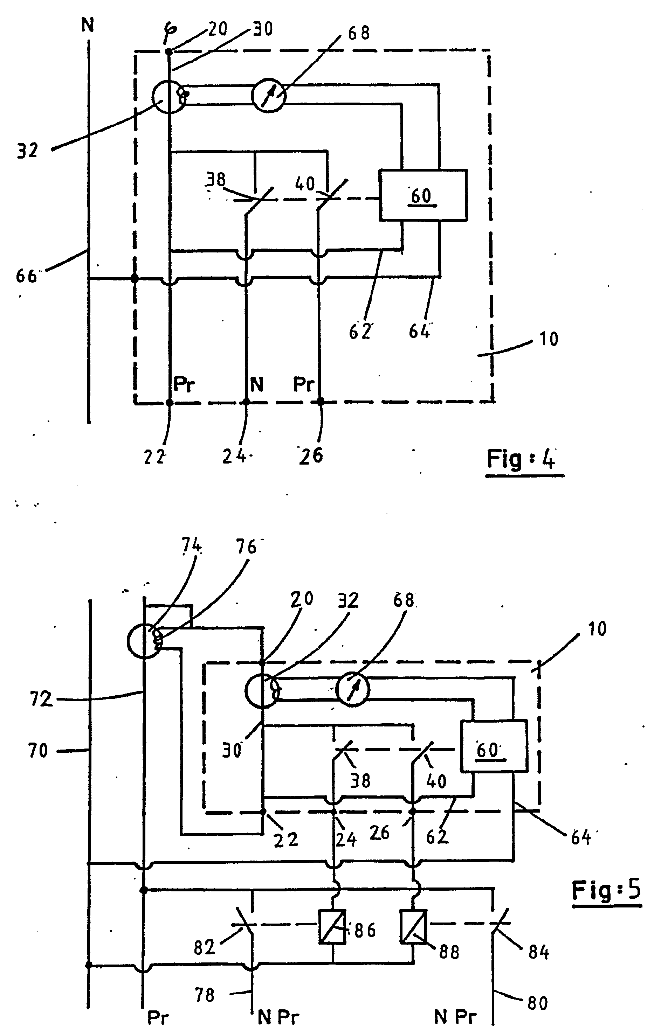

Sur les figures 4 et 5, qui illustrent deux modes d'application du délesteur, les mêmes numéros de repère sont utilisés pour désigner des éléments identiques ou analogues à ceux des figures 1 à 3.

Les relais ou interrupteurs 38, 40 sont commandés par un bloc de traitement 60 du type électronique, alimenté par des conducteurs 62, 64 reliés respectivement au conducteur 30, qui correspond au conducteur de phase de l'installation, et au conducteur neutre 66, qui peut être extérieur ou prévu à l'intérieur du boîtier. Le capteur 32 délivre un signal à un dispositif de calibrage 68, dont la sortie est reliée au bloc de traitement 60 commandant les relais 38, 40. Le bloc de délestage 10 est disposé à l'aval du disjoncteur de branchement, par exemple sur le tableau d'abonné d'un logement ou d'une maison, le circuit de phase étant relié à la borne d'entrée 20. A la borne de sortie 22 sont raccordés les circuits prioritaires de l'installation, en particulier l'éclairage, tandis qu'aux bornes de sortie 24, 26 sont raccordés les circuits non prioritaires, notamment le chauffe-eau et les convecteurs de chauffage de certaines pièces. Lorsque le courant parcourant le conducteur 30 dépasse un seuil prédéterminé par le dispositif de calibrage, le bloc de traitement provoque l'ouverture successive des interrupteurs 38, 40, pour interrompre l'alimentation des circuits non prioritaires, et maintenir la puissance absorbée à une valeur inférieure à la puissance de branchement. Le relestage s'effectue avec une temporisation suffisante pour éviter tout effet de pompage.

La figure 5 illustre l'utilisation du bloc de délestage 10 dans une installation industrielle ayant un conducteur de neutre 70 et un conducteur de phase 72. L'installation peut bien entendu être du type triphasé, auquel cas le conducteur 72 est constitué de trois conducteurs de phase. Un transformateur de courant 74 en forme de tore, entourant le conducteur 72, mesure le courant parcourant ce conducteur 72. Le transformateur de courant 74 est du type standard délivrant sur son enroulement secondaire 76, par exemple un courant de 5 ampères, lorsque le courant de phase parcourant le conducteur 72 atteint la valeur de délestage. L'entrée et la sortie de l'enroulement secondaire 76 du transformateur de courant 74 sont reliées respectivement aux bornes 20 et 22 du bloc de délestage 10. Au conducteur de phase 72 sont reliés en parallèle deux circuits 78, 80 avec interposition de deux interrupteurs 82, 84, chacun commandé par une bobine 86, 88. La bobine 86 est reliée à la borne 24 et la bobine 88 à la borne 26 du bloc de délestage 10. Les interrupteurs 82, 84, commandés par les bobines 86, 88, sont agencés pour être en position ouvert, lorsque les bobines 86, 88 ne sont pas excitées. Pour assurer l'alimentation du bloc de traitement électronique 60, il convient de relier la sortie de l'enroulement secondaire 76 connectée à la borne 20 au conducteur de phase 72 et de relier le conducteur 64 au conducteur de neutre 70 de l'installation.

Dans l'hypothèse retenue d'un délestage pour un courant parcourant le conducteur 72, correspondant à un courant de 5 ampères délivré par le transformateur de courant 74, il convient de régler le dispositif de calibrage 68 sur la valeur 5 ampères. En fonctionnement normal, correspondant à un courant absorbé inférieur au seuil de délestage, les interrupteurs 38, 40 du bloc de délestage 10 sont fermés pour alimenter les bobines 86, 88, qui maintiennent les interrupteurs 82, 84 fermés pour alimenter les circuits non prioritaires 78, 80, ainsi que le circuit prioritaire raccordé au conducteur 72. Lorsque le courant dans le conducteur 72 dépasse le seuil de délestage, l'enroulement secondaire 76 délivre un courant supérieur à 5 ampères mesuré par le capteur 32, qui, par l'intermédiaire du bloc de traitement 60, envoie un ordre d'ouverture successif des interrupteurs 38, 40. L'ouverture des interrupteurs 38, 40 interrompt l'alimentation des bobines 86,88, provoquant l'ouverture des interrupteurs 82, 84 d'alimentation des circuits non prioritaires 78, 80. Si l'ouverture de l'un des interrupteurs est suffisante pour abaisser la puissance absorbée en-dessous du seuil de délestage, le deuxième circuit reste bien entendu alimenté de la manière usuelle. Après une durée prédéterminée, le bloc de traitement 60 referme les interrupteurs 38, 40 et de ce fait les interrupteurs 82, 84 pour une nouvelle alimentation de l'ensemble des circuits. Si la puissance absorbée est toujours supérieure au seuil de délestage, un nouveau cycle de délestage est automatiquement déclenché.

Le bloc de délestage 10 peut bien entendu comporter un nombre supérieur ou inférieur de sorties non prioritaires, l'ensemble ou seulement certaines de ces sorties étant éventuellement utilisées dans une application industrielle.

## Revendications

1. Dispositif de délestage à boîtier moulé (10) ayant sur l'une de ses faces latérales une borne d'entrée (20) de connexion à la source de courant et sur la face opposée au moins deux bornes (22, 24) de sortie, l'une (22) d'alimentation d'un circuit prioritaire et l'autre (24) d'alimentation d'un circuit non prioritaire et contenant un premier conducteur (30) de liaison directe de la borne d'entrée (20) et de la borne de sortie prioritaire (22), un capteur (32) de mesure du courant entrant par la borne d'entrée (20), une première carte (28) à circuit imprimé portant les composants d'un circuit électronique de traitement du signal fourni par le capteur (32) et un relais (38) piloté par ledit circuit électronique et ayant des contacts insérés dans un circuit reliant la borne de sortie (24) non prioritaire audit premier conducteur de liaison (30), caractérisé en ce que ledit relais (38) est rigidement assujetti à ladite première carte (28), son entrée étant connectée électriquement à un circuit imprimé de puissance de ladite première carte (28) et sa sortie à un deuxième conducteur (34) de liaison à la borne de sortie non prioritaire (24) et que ledit premier conducteur (30) de liaison est connecté mécaniquement à la première carte (28) et est connecté électriquement par soudure audit circuit imprimé de puissance.

2. Dispositif de délestage selon la revendication 1, caractérisé en ce que ladite première carte (28) porte un commutateur (44) de réglage du seuil de délestage comprenant une deuxième carte (50) à circuit imprimé rigidement assujettie à la première carte (28).

3. Dispositif de délestage selon la revendication 1 ou 2, caractérisé en ce que les extrémités libres desdits premier (30) et deuxième (34) conducteurs de liaison sont aménagées en plage de connexion des bornes d'entrée (20) et de sortie (22, 24) du dispositif de délestage.

4. Dispositif de délestage selon la revendication 1, 2 ou 3, caractérisé en ce que le boîtier moulé étant du type modulaire miniature (10) est constitué d'un socle (14) et d'un couvercle (12) et que lesdits conducteurs (30, 34) de liaison s'étendent dans le plan de joint (16) du socle et du couvercle.

5. Dispositif de délestage selon l'une quelconque des revendications précédentes, caractérisé en ce qu'il est agencé pour un réglage de valeurs de délestage correspondant à une gamme de courants entrant par ladite entrée (20) comprenant des valeurs supérieures à 15 ampères, pour des installations de distribution domestique et au moins une valeur inférieure à 15 ampères pour un dispositif de délestage d'une installation de distribution industrielle ayant un circuit prioritaire (72) et au moins un circuit (78) non prioritaire, doté d'un interrupteur (82), dont l'ouverture interrompt l'alimentation du circuit (78) non prioritaire, dans lequel dispositif de délestage industriel un transformateur de courant (74) abaisseur mesure le courant absorbé par les circuits prioritaires (72) et non prioritaires (78), les bornes de l'enroulement secondaire (76) du transformateur de courant (74) étant connectées respectivement à l'entrée (20) et à ladite une borne de sortie prioritaire (22) du bloc de délestage (10) et ladite autre borne de sortie (24) non prioritaire étant connectée à une bobine de commande (86) dudit interrupteur (82) pour commander son ouverture lorsque ladite autre sortie (24) n'est plus alimentée.

6. Dispositif de délestage selon la revendication 5, caractérisé en ce que la valeur de délestage inférieure à 15 ampères est de 5 ampères.

7. Dispositif de délestage selon la revendication 5 ou 6, caractérisé en ce qu'il comporte un commutateur de sélection des valeurs de délestage supérieures et inférieures à 15 ampères.

8. Dispositif de délestage selon la revendication 5, 6 ou 7, caractérisé en ce que le bloc de délestage (10) comprend un bloc électronique de traitement (60) ayant deux bornes d'alimentation, l'une reliée à ladite borne d'entrée, elle-même relié directement au conducteur de phase (30) dans une installation domestique et indirectement par le transformateur de courant (74) dont l'enroulement secondaire (76) est connecté au conducteur de phase (72) dans une installation industrielle et l'autre borne d'alimentation étant connectée au conducteur de neutre (66,70) ou d'une autre phase de l'installation.

**Patentansprüche**

1. Stromunterbrechungsvorrichtung mit Gussgehäuse (10), die auf einer ihrer Seitenflächen eine Eingangsklemme (20) zur Verbindung mit der Stromquelle und auf der gegenüberliegenden Seite mindestens zwei Ausgangsklemmen (22, 24) aufweist, eine (22) für die Versorgung eines Vorrangkreises und die andere (24) für die Versorgung eines nicht vorrangigen Kreises, und mit einem ersten Leiter (30) zur direkten Verbindung der Eingangsklemme (20) und der vorrangigen Ausgangsklemme (22), einem Strommessfühler (32), der durch die Eingangsklemme (20) eintritt, einer erste Karte (28) mit einer gedruckten Schaltung, welche die Elemente eines elektronischen Verarbeitungskreises des von dem Fühler (32) abgegebenen Signals trägt, und einem Relais (38), das von dem genannten elektronischen Kreis gesteuert wird und Kontakte aufweist, die in einen Kreis eingefügt sind, der die nicht vorrangige Ausgangsklemme (24) mit dem ersten Verbindungsleiter (30) verbindet, dadurch gekennzeichnet, dass das genannte Relais (38) fest mit der genannten ersten Karte (28) verbunden ist, wobei sein Eingang elektrisch mit einer gedruckten Leistungsschaltung der genannten ersten Karte (28) verbunden ist, und sein Ausgang mit einem zweiten Leiter (34) zur Verbindung mit der nicht vorrangigen Ausgangsklemme (24), und dass der genannte erste Verbindungsleiter (30) mechanisch mit der ersten Karte (28) verbunden ist und elektrisch durch Schweissung mit der genannten gedruckten Leistungsschaltung verbunden ist.

2. Stromunterbrechungsvorrichtung nach Anspruch 1, dadurch gekennzeichnet, dass die genannte erste Karte (28) einen Regelungsschalter (44) der Unterbrechungsschwelle trägt, der eine zweite Karte (50) mit gedruckter Schaltung aufweist, die fest mit der ersten Karte (28) verbunden ist.

3. Stromunterbrechungsvorrichtung nach Anspruch 1 oder 2, dadurch gekennzeichnet, dass die freien Enden der genannten ersten (30) und zweiten (34) Verbindungsleiter als Verbindungsfahnen der Eingangsklemmen (20) und der Ausgangsklemmen (22, 24) der Unterbrechungsvorrichtung ausgeführt sind.

4. Stromunterbrechungsvorrichtung nach Anspruch 1, 2 oder 3, dadurch gekennzeichnet, dass das Miniaturmodul-Gussgehäuse (10) aus einem Sockel (14) und einem Deckel (12) besteht, und dass sich die genannten Verbindungsleiter (30, 34) in der Verbindungsebene (16) des Sockels und des Deckels erstrecken.

5. Stromunterbrechungsvorrichtung nach einem der vorhergehenden Ansprüche, dadurch gekennzeichnet, dass sie für eine Regelung von Unterbrechungswerten ausgeführt ist, die einem Bereich von Strömen entspricht, die durch den genannten Eingang (20) eintreten und Werte von mehr als 15 Ampères für Haus-Verteileranlagen aufweisen, und mindestens einen Wert unter 15 Ampères für eine Unterbrechungsvorrichtung einer industriellen Verteileranlage aufweisen, mit einem vorrangigen Kreis (72) und mindestens einem nicht vorrangigen Kreis (78), der mit einem Schalter (82) ausgerüstet ist, dessen Oeffnung die Versorgung des nicht vorrangigen Kreises (78) unterbricht, wobei in der Industrie-Unterbrechungsvorrichtung ein Stromabspann-Transformator (74) den von den vorrangigen (72) und nicht vorrangigen Stromkreisen (78) aufgenommenen Strom misst, wobei die Klemmen der Sekundärwicklung (76) des Stromtransformators (74) mit dem Eingang bzw. mit der genannten einen nicht vorrangigen Ausgangsklemme (22) des Unterbrechungsblocks (10) verbunden ist, und wobei die genannte andere nicht vorrangige Ausgangsklemme (24) mit einer Steuerspule (86) des genanten Schalters (82) verbunden ist, um seine Oeffnung zu bewirken, wenn der genannte andere Ausgang (24) nicht mehr versorgt ist.

6. Unterbrechungsvorrichtung nach Anspruch 5, dadurch gekennzeichnet, dass der Unterbrechungswert unter 15 Ampères 5 Ampères beträgt.

7. Unterbrechungsvorrichtung nach Anspruch 5 oder 6, dadurch gekennzeichnet, dass er einen Schalter zur Wahl der Unterbrechungswerte höher und niedriger als 15 Ampères aufweist.

8. Unterbrechungsvorrichtung nach Anspruch 5, 6 oder 7, dadurch gekennzeichnet, dass der Unterbrechungsblock (10) eine elektronische Verarbeitungseinheit (60) aufweist mit zwei Versorgungsklemmen, von denen die eine mit der genannten Eingangsklemme verbunden ist, die wiederum direkt mit dem Phasenleiter (30) in einer häuslichen Anlage verbunden ist und indirekt durch den Stromtransformator (74), dessen Sekundärwicklung (76) mit dem Phasenleiter (72) in einer Industrieanlage verbunden ist, und wobei die andere Versorgungsklemme mit dem Nulleiter (66, 70) oder einer anderen Phase der Anlage verbunden ist.

## Claims

1. A moulded case disconnecting device (10) having on one of its side faces an input terminal (20) for connection to the current source and on the opposite face at least two output terminals (22, 24), one (22) supplying a priority circuit and the other (24) supplying a non-priority circuit and containing a first direct connecting conductor (30) of the input terminal (20) and the priority output terminal (30), a current measuring sensor (32) input via the input terminal (20), a first printed circuit board (28) bearing the components of electronic processing circuitry of the signal supplied by the sensor (32) and a relay (38) controlled by said electronic circuitry and having contacts inserted in a circuit connecting the non-priority output terminal (24) to said first connecting conductor (30), characterized in that said relay (38) is rigidly affixed to said first board (28), its input being electrically connected to a power printed circuit of said first board (28) and its output to a second connecting conductor (34) connecting it to the non-priority output terminal (24) and that said first connecting conductor (30) is mechanically connected to the first board (28) and is electrically connected by welding to said power printed circuit.

2. The disconnecting device according to claim 1, characterized in that said first board (28) bears a selector switch (44) for adjustment of the disconnection threshold comprising a second printed circuit board (50) rigidly affixed to the first board (28).

3. The disconnecting device according to claim 1 or 2, characterized in that the free ends of said first (30) and second (34) connecting conductors are arranged as connecting strips of input (20) and output (22, 24) terminals of the disconnecting device.

4. The disconnecting device according to claim 1, 2 or 3, characterized in that the moulded case (10) being of the miniature modular type is formed by a base (14) and a cover (12) and that said connecting conductors (30, 34) extend in the connection plane (16) of the base and cover.

5. The disconnecting device according to any one of the above claims, characterized in that it is arranged for adjustment of disconnection values corresponding to a range of currents input via said input (20) comprising values greater than 15 Amps for domestic distribution installations, and at least a value less than 15 Amps for a disconnecting device of an industrial distribution installation having a priority circuit (72) and at least one non-priority circuit (78), provided with a switch (82), opening of which interrupts the power supply to the non-priority circuit (78), in which industrial disconnecting device a reducing current transformer (74) measures the current absorbed by the priority (72) and non-priority (78) circuits, the terminals of the secondary winding (76) of the current transformer (74) being connected respectively to the input (20) and to said one priority output terminal (22) of the disconnecting device (10) and said other non-priority output terminal (24) being connected to an operating coil (86) of said switch (82) to open it when said other output (24) is no longer supplied.

6. The disconnecting device according to claim 5, characterized in that the disconnection value lower than 15 Amps is 5 Amps.

7. The disconnecting device according to claim 5 or 6, characterized in that it comprises a selector switch of the disconnection values greater and lower than 15 Amps.

8. The disconnecting device according to claim 5, 6 or 7, characterized in that the disconnecting device (10) comprises an electronic processing unit (60) having two supply terminals, one connected to said input terminal, itself connected directly to the phase conductor (30) in a domestic installation and indirectly via the current transformer (74) whose secondary winding (76) is connected to the phase conductor (72) in an industrial installation and the other supply terminal being connected to the neutral conductor (66, 70) or to another phase conductor of the installation.

fig.1

fig. 2

EP 0 233 127 B1

FIG. 3

**Fig : 4**

**Fig : 5**